# NEUE EUROPÄISCHE PATENTSCHRIFT

(11) **EP 1 005 436 B2**
(45) Veröffentlichungstag und Bekanntmachung des Hinweises auf die Entscheidung über den Einspruch: **05.04.2006**
(45) Hinweis auf die Patenterteilung: 27.02.2002
(21) Anmeldenummer: 98940203.7
(22) Anmeldetag: 10.07.1998
(51) Int. Cl.: B66C 23/80, B60S 9/12

(54) **FAHRBARE ARBEITSMASCHINE MIT TELESKOPIERBAREN STÜTZAUSLEGERN**
MOBILE WORK MACHINE WITH TELESCOPIC SUPPORTING LEGS
MACHINE DE TRAVAIL MOBILE DOTEE DE BRAS D'APPUI TELESCOPIQUES

(30) Priorität: 21.08.1997 DE 19736109
(43) Veröffentlichungstag der Anmeldung: 07.06.2000
(73) Patentinhaber: PUTZMEISTER Aktiengesellschaft, 72631 Aichtal (DE)
(72) Erfinder: WOLFRAM, Markus, D-72631 Aichtal (DE)
(74) Vertreter: Wolf, Eckhard
(86) Internationale Anmeldenummer: PCT/EP1998/004297
(87) Internationale Veröffentlichungsnummer: WO 1999/010269

(56) Entgegenhaltungen:
- EP-A- 0 103 434
- EP-A- 0 357 988
- DE-A- 3 615 295
- DE-A- 4 344 779
- DE-A- 19 617 505
- JP-A- 56 013 243
- US-A- 3 087 627

## Beschreibung

Die Erfindung betrifft eine fahrbare Arbeitsmaschine mit einem die Arbeitsmaschine tragenden, mindestens eine Vorderachse und eine Hinterachse aufweisenden Fahrgestell, mindestens einem am Fahrgestell angeordneten, vorzugsweise horizontal ausgerichteten, als Auschubbaslen ausgebildeten Teleskopsegment und einem in dem Teleskopsegment zwischen einer eingezogenen Transportstellung und mindestens einer ausgestellten Arbeitsstellung verschiebbaren, an seinem freien Ende mit einem vorzugsweise ausfahrbaren Fußteil bodenseitig abstützbaren Stützausleger.

Es ist eine als fahrbare Betonpumpe ausgebildete Arbeitsmaschine der eingangs angegebenen Art bekannt (EP-B 0 357 988), bei der zwei als Teleskopbeine ausgebildete, mit ihrem rohrförmigen Teleskopsegment an einem starr mit einem Mastböck verbundenen Fahrgestell angeordnete, diagonal nach vome weisende Stützauslegervorgesehen sind, die zwischen einer eingezogenen Transportstellung und einer ausgestellten Abstützstellung in den einander überkreuzenden Teieskopsegmenteri verschiebbar sind. Die Diagonalteleskopbeine ermöglichen es zwar, daB die Betonpumpe auch in engen Baustellen aufgestellt werden , kann, in denen Fahrzeuge mit vorderen Schwenkbeinen oder Teleskopschwenkbeinen keinen Platz mehr finden würden. Die Verkehrsverhältnisse auf den Straßen und die Platzprobleme auf Baustellen lassen jedoch oft eine Abstützung der Stützausleger in voller Breite quer zum Fahrzeug nicht zu. Es ist daher häufig eine Einschränkung der Abstützbreite erforderlich.

Ausgehend hiervon liegt der Erfindung die Aufgabe zugrunde, die bekannte Arbeitsmaschine dahingehend zu verbessern, daß mit einfachen Mitteln eine Veränderung der Abstützbreite über die Stützausleger möglich ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, daß es bei den vielen, in der Praxis vorkommenden Fällen, bei denen nur auf der einen Seite der Arbeitsmaschine gearbeitet wird, erstrebenswert ist, den vorderen Stützausleger, der der Arbeitssene abgewandt ist, möglichst dicht und weit vorne am Fahrerhaus des Fahrgestells abzustützen, mit dem Ziel einer günstigen vorderen Kippkante. Um dies zu erreichen, wird gemäß der Erfindung vorgeschlagen, daß das Teleskopsegment aus einer fahrgestellfesten inneren Segmentpartie und einer gegenüber dieser um eine zur Fahrgestellhochachse parallele Gelenkachse begrenzt verschwenkbaren äußeren Segmentpartie besteht. Befindet sich der Stützausleger in seiner eingefahrenen Transportstellung, ist das deskop segment über seine gesamte Länge belegt, so daß die äußere Segmentpartie nicht gedreht werden kann. Befindet sich dagegen der Stützausleger in seiner ausgefahrenen Abstützstellung, so wird der Stützausleger nur von der äußeren, drehbaren Segmentpartie gehalten. In-dieser Stellung kann die Segmentpartie zusammen mit dem Stützausleger bis an das Fahrgestell herangeschwenkt werden,

Eine vorteilhafte Ausgestaltung der Erfindung sieht vor, daß die äußere Segmentpartie zusammen mit der Gelenkachse auf einem quer zur Fahrgestellängsachse relativ zum Fahrgestell begrenzt verschiebbaren Träger angeordnet ist. Der Träger besteht dabei zweckmäßig aus einem in einer Schubführung quer zur Fahr gestellängsachse geführten Führungsteil und einem die äußere Segmentpartie tragenden, gegenüber dem Führungstell um die Gelenkachse verschwenkbaren Schwenkteil. Mit diesen Maßnahmen wird erreicht, daß die Gelenkachse seitlich über den Fahrgestellrand herausgeschoben werden kann, so daß der Stützausleger kollisionsfrei bis nahe an das Fahrgestell herangeschwenkt werden kann.

Eine vorteilhafte Ausgestaltung der Erfindung sieht vor, daß die fahrgesteilfeste Segmentpartie im Abstand hinter einer Vorderachse oder einem Führerhaus des Fahrgestells angeordnet ist und ausstellseitig schräg in Richtung Vorderachse oder Führerhaus weist. Zur Erleichterung der Montage und zur Verbesserung der Schwenkkinematik hat es sich als vorteilhaft erwiesen, wenn die Gelenkachse seitlich gegenüber der äußeren Segmentpartie in Richtung Vorderachse versetzt ist.

Eine Vergrößerung der Ausstellbreite kann dadurch erzielt werden, daß der Stützausleger aus mindestens zwei teleskopierbaren Teilen besteht, von denen der äußere Teil das Fußteil trägt.

Eine weitere bevorzugte Ausgestaltung der Erfindung sieht vor, daß zwei nach entgegengesetzten Seiten des Fahrgestells weisende, im Bereich ihrer inneren Segmentpartien die Fahrgestellängsachse in verschiedenen Ebenen kreuzende Teleskopsegmente zur Aufnahme je eines Stützauslegers vorgesehen sind.

Gemäß einer weiteren vorteilhaften Ausführungsvariante sind die Segmentpartien des Teleskopsegments und der Stützausleger kreisbogenförmig gekrümmt. Dabei kann das Teleskopsegment die Fahrgestellängsachse hinter einer Vorderachse oder einem Führerhaus quer kreuzen und ausstellseitig schräg nach außen in Richtung Vorderachse oder Führerhaus weisen. Eine abgewandelte Ausführungsvariante sieht vor, daß das kreisbogenförmig gekrümmte Teleskopsegment tangential zur Fahrzeuglängsachse ausgerichtet ist und ausstellseitig in Fahrtrichtung schräg seitlich nach außen weist.

Um eine stabile Abstützung zu gewährleisten, ist zweckmäßig ein die äußere Segmentpartie in mindestens einer vorgegebenen Winkelstellung gegen Verdrehen um ihre Gelenkachse sperrender Verriegelungsmechanismus vorgesehen.

Im folgenden wird die Erfindung anhand eines in der Zeichnung in schematischer Weise dargestellten Ausführungsbeispiels näher erläutert. Es zeigen
- Fig. 1: eine Ansicht einer am Straßenrand abgestellten Autobetonpumpe mit auf der Straßenseite schmal abgestützten Stützauslegern;
- Fig. 2: eine Draufsicht auf ein Fahrgestell mit diagonal teleskopierbaren, breit und schmal abstützbaren Stützauslegern;
- Fig. 3: eine Detaildarstellung eines Slützauslegers der Autobetonpumpe nach Fig. 1;
- Fig. 4: eine Draufsicht auf ein Fahrgestell einer Autobetonpumpe mit kreisbogenförmig teleskopierbaren, schmal und breit abstützbaren Stützauslegern;
- Fig. 5a und b: eine Draufsicht auf ein Fahrgestell einer Autobetonpumpe mit kreisbogenförmig gebogenen, teleskopierbaren vorderen Stützbeinen für die Schmal- und Breitabstützung in zwei verschiedenen Ausstell-Zuständen.

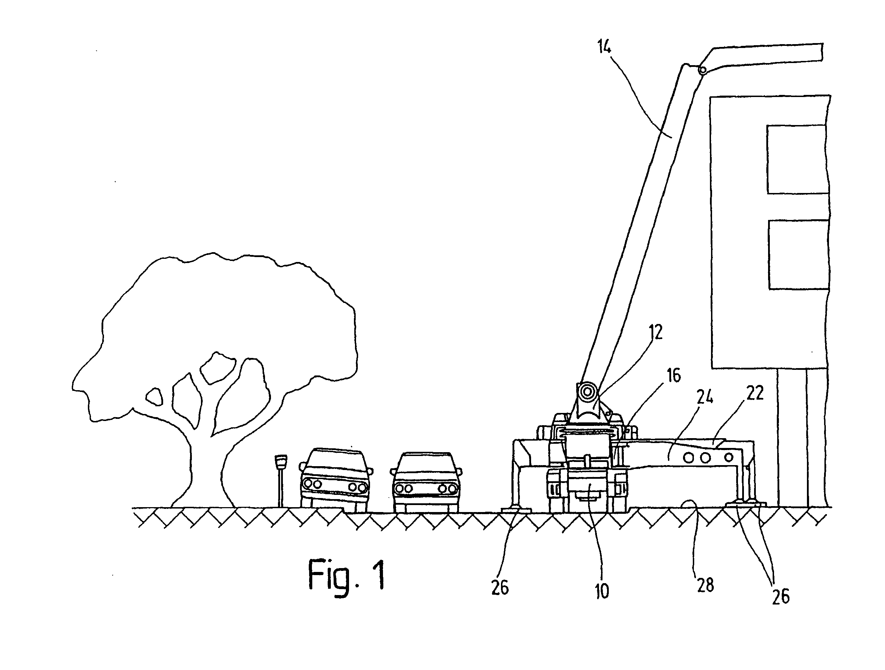

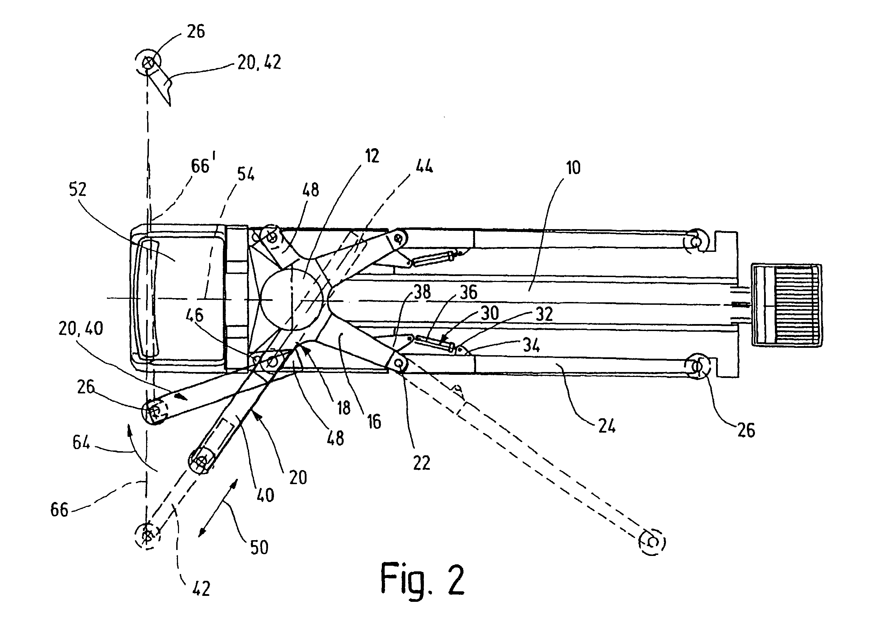

Die in Fig. 1 und Fig. 2 dargestellte fahrbare Betonpumpe besteht im wesentlichen aus einem mehrachsigen Fahrgestell 10, einem an einem vorderachsnahen Mastbock 12 um eine vertikale Achse drehbar gelagerten Betonverleilermast 14 und einer Stützkonstruktion, die einen fahrgesteiffesten Tragrahmen 16, zwei am Tragrahmen 16 in je einem als Ausschubkasten ausgebildeten Teleskopsegment 18 verschiebbare vordere Stützausleger20 und zwei um eine lotrechte Achse 22 verschwenkbare hintere Stützausleger 24 aufweist. Die Stützausleger 20,24 sind mit je einem nach unten ausfahrbaren Fußteil 26 auf dem Boden 28 abstützbar. Zum Verschwenken der hinteren Stützausleger 24 sind hydraulische Arbeitszylinder 30 vorgesehen, deren Kolbenstange 32 an einer stützauslegerseitigen Anlenkstelle 34 und deren Zylinderteil 36 an einer fahrgestellseitigen Anlenkstelle 38 angelenkt sind.

Die vorderen Stützausleger 20 bestehen bei allen Ausführungsbeispielen aus zwei teleskopierbaren Teilen 40, 42, von denen das innere Auslegerteil 40 im Teleskopsegment 1geführt ist und das äußere Auslegerteil 42 in dem als Teleskoprohr ausgebildeten inneren Auslegerteil 40 geführt ist und an seinem freien Ende das Fußteil 26 trägt.

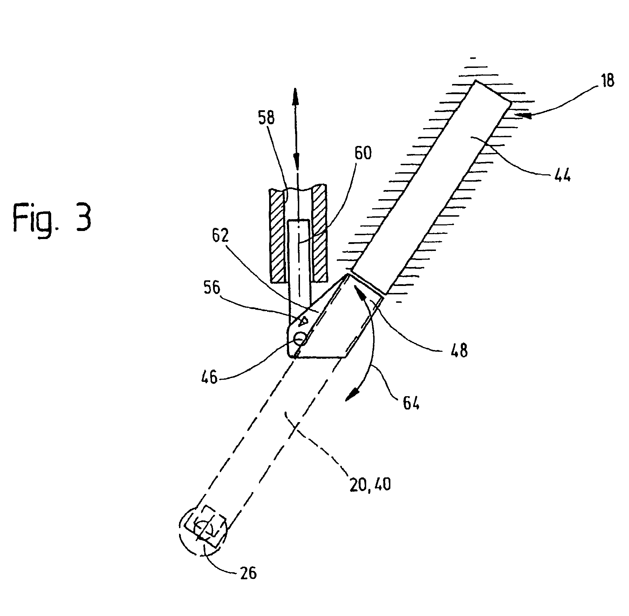

Umwahlweise eine Schmalabstützung und eine Breitabstützung zu ermöglichen, besteht das Teleskopsegment 18 aus einer fahrgestellfesten inneren Segmentpartie 44 und einer gegenüber dieser um eine zur Fahrgesteilhochachse parallele Gelenkachse 46 begrenzt verschwenkbaren äußeren Segmentpartie 48. Bei in das Teleskopsegment eingeschobenerTransportsteltung des Stützauslegers 20 ist das Gelenk 46 gesperrt, während es in der ausgestellten Abstützstellung zum Verschwenken des Stützauslegers 20 freigegeben ist. Für die Breitabstützung wird der Stützausleger 20 in Richtung des Doppelpfeils 50 teleskopiert, ohne daß die äußere Segmentpartie 48 um die Gelenkachse 46 verschwenkt wird. Fürdie Schmaiabstutzung kann der aus dem Teleskopsegment 18 in seine Abstützsteflung verschobene Stützausleger 20 zusammen mit der äußeren Segmentpartie 48 um die Gelenkachse 46 in Richtung Führerhaus 52 des Fahrgestells geschwenkt werden. Um hierbei Kollisionen zu vermeiden, ist es gemäß Fig. 3 von Vorteil, wenn die äußere Segmentpartie 48 zusammen mit der Gelenkachse 46 auf einem quer zur Fahrgestellängsachse 54 relativ zum Fahrgestell 10 begrenzt verschiebbaren Träger 56 angeordnet ist. Bei dem gezeigten Ausführungsbeispiel weist der Träger einen in einer Schubführung 58 quer zur Fahrgestellängsachse 54 geführten Führungsteil 60 und einen die äu-Bere Segmentpartie 48 tragenden, gegenüber dem Führungsteil 60 um die Gelenkachse 46 verschwenkbaren Schwenkteil 62 auf.

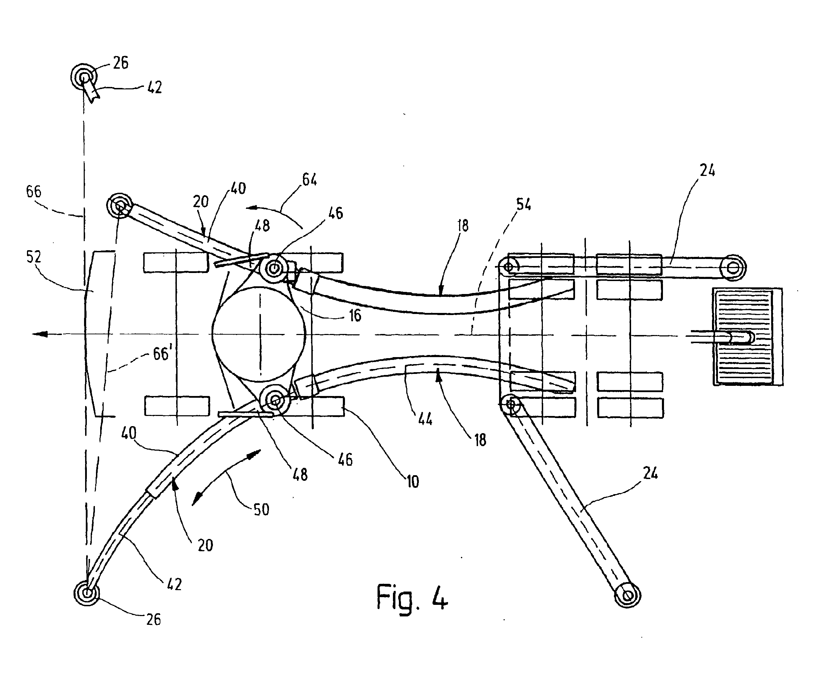

Bei dem in Fig. 4 gezeigten Ausführungsbeispiel sind die Teleskopsegmente 18 und die vorderen Stützausleger 20 kreisbogenförmig gekrümmt und im mittleren Bereich des Fahrgestells 10 tangential zur Fahrgestellängsachse 54 ausgerichtet. Die vorderen Stiitzausleger 20 sind auch hier teleskopierbar ausgebildet, während das Teleskopsegment 18 eine gestellfeste innere Segmentpartie 44 und eine um die Gelenkachse 46 verschwenkbare äußere Segmentpartie 48 aufweist. Bei der Breitabstützung (unterer Teil der Fig. 4) wird derteleskopierbare Stützausleger 20 in Richtung des Doppelpfeils 50 ohne Verschwenken der äußeren Segmentpartie 48 in seine Abstützstellung gebracht. Für die Schmalabstützung (Fig. 4 oben) wird zunächst der innere Auslegerteil 40 des Stützauslegers 20 aus dem Teleskopsegment 18 nach außen verschoben und sodann zusammen mit der äußeren Segmentpartie 48 um die Gelenkachse 46 in Richtung des Pfeils 64 verschwenkt.

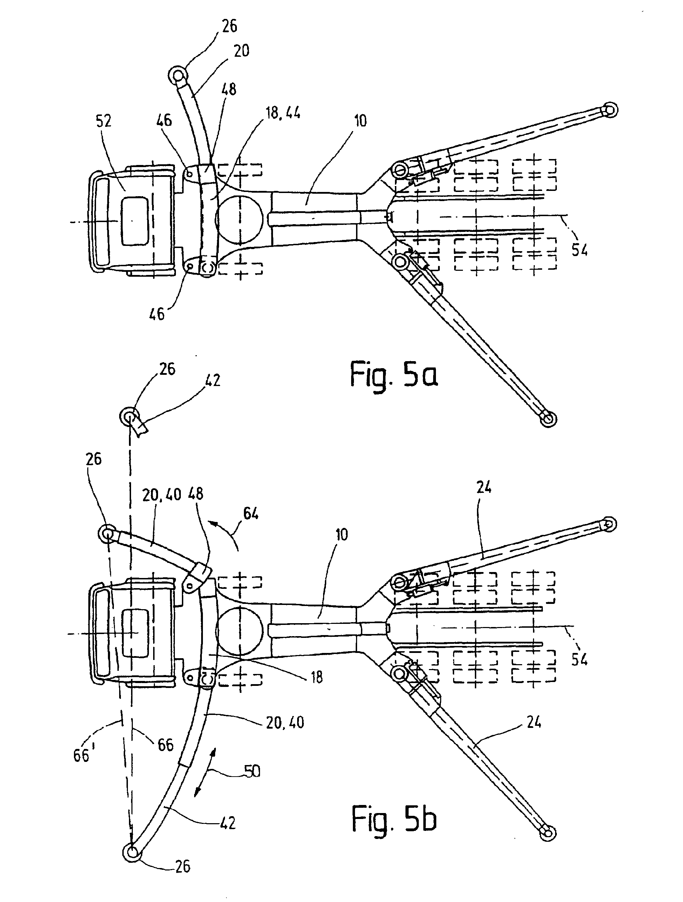

Bei dem in Fig. 5a und b gezeigten Ausführungsbeispiel sind die kreisbogenförmig nach vome gekrümmten Teleskopsegmente 18 quer zur Fahrgestellängsachse 54 in verschiedenen Ebenen des Fahrgestells angeordnet. Die Teleskopsegmente sind dort ebenfalls in je eine fahrgestellfeste innere Segmentpartie 44 und eine um eine vertikale Gelenkachse 46 gegenüber dem Fahrgestell verschwenkbare äußere Segmentpartie 48 unterteilt. Die kreisbogenförmig gebogenen teleskopierbaren Stützausleger 20 werden in der Transportstellung vollständig in die als Ausschubkasten ausgebildeten Teieskopsegmente 18 eingeschoben (Fig. 5a unten). Zur Breitabstützung werden die Stützausleger 20 teleskopierend in Richtung des Doppelpfeils 50 in ihre in Fig. 5b unten gezeigte Abstützstellung gebracht. Für die Schmalabstützung wird der betreffende Stützausleger 20 unteleskopiert aus dem Teleskopsegment 1B ausgefahren und zusammen mit der äußeren Segmentpartie 48 um die Gelenkachse 46 in Richtung des Pfeils 64 gegen das Fahrgestell geschwenkt.

In den Fig. 2, 4 und 5 sind die Kippachsen in den jeweiligen Abstützstellungen durch gestrichelte Linien 66,66' angedeutet.

Zusammenfassend ist folgendes festzustellen: Die Erfindung bezieht sich auf eine fahrbare Arbeitsmaschine, insbesondere eine Autobetonpumpe. Die fahrbare Arbeitsmaschine ist auf einem Fahrgestell 10 angeordnet, das mindestens ein vorzugsweise horizontal ausgerichtetes, als Ausschubkasten ausgebildetes Teleskopsegment 18 sowie einen in dem Teleskopsegment von einer eingezogenen Transportstellung in mindestens eine ausgestellte Abstützstellung verschiebbaren, an seinem freien Ende mit einem Fußteil 26 am Boden 28 abstützbaren Stützausleger 20 aufweist. Um mit einfachen Mitteln eine Veränderung der Abstützbreite über die Stützausleger zu ermöglichen, wird gemäß der Erfindung vorgeschlagen, daß das Teleskopsegment 18 aus einer fahrgestelffesten inneren Segmentpartie 44 und einer gegenüber dieser um eine zur Fahrgestellhochachse parallele Gelenkachse 46 begrenzt verschwenkbaren äußeren Segmentpartie 48 besteht.

## Patentansprüche

1. Fahrbare Arbeitsmaschine mit einem mindestens eine Vorderachse und eine Hinterachse aufweisenden Fahrgestell (10), mindestens einem am Fahrgestell angeordneten, vorzugsweise horizontal ausgerichteten, als Ausschubkasten ausgebildeten Teleskopsegment (18), und einem in dem Teleskopsegment (1B) zwischen einer eingezogenen Transportstellung und mindestens einer ausgestellten Abstützstellung verschiebbaren, an seinem freien Ende mit einem Fußteil (26) bodenseitig abstützbaren Stützausleger (20), **dadurch gekennzeichnet, daß** das Teleskopsegment (18) aus einer fahrgestellfesten inneren Segmentpartie (44) und einer gegenüber dieser um eine zur Fahrgestellhochachse parallele Gelenkachse (46) begrenzt verschwenkbaren äußeren Segmentpartie (48) besteht.

2. Arbeitsmaschine nach Anspruch 1, **dadurch gekennzeichnet, daß** die äußere Segmentpartie (48) zusammen mit der Gelenkachse (46) auf einem quer zur Fahrgestellängsachse (54) relativ zum Fahrgestell begrenzt verschiebbaren Träger (56) angeordnet ist.

3. Arbeitsmaschine nach Anspruch 2, **dadurch gekennzeichnet, daß** der Träger einen in einer Schubführung (58) quer zur Fahrgestellängsachse (54) geführten Führungsteil (60) und einen die äußere Segmentpartie (48) tragenden, gegenüber dem Führungsteil (60) um die Gelenkachse (46) verschwenkbaren Schwenkteil (62) aufweist.

4. Arbeitsmaschine nach einem der Ansprüche 1 bis 3, **dadurch gekennzeichnet, daß** die fahrgestellfeste innere Segmentpartie (44) im Abstand hinter einer Vorderachse oder einem Führerhaus (52) des Fahrgestells angeordnet ist und ausstellseitig schräg in Richtung Vorderachse oder Führerhaus weist.

5. Arbeitsmaschine nach Anspruch 4, **dadurch gekennzeichnet, daß** die äußere Segmentpartie (48) zusammen mit dem in seiner Abstützstellung befindlichen Stützausleger (20) in Richtung Vorderachse gegen das Fahrgestell (10) verschwenkbar ist.

6. Arbeitsmaschine nach Anspruch 4 oder 5, **dadurch gekennzeichnet, daß** die Gelenkachse (46) seitlich gegenüber der äußeren Segmentpartie (48) in Richtung Vorderachse versetzt ist.

7. Arbeitsmaschine nach einem der Ansprüche 1 bis 6, **dadurch gekennzeichnet, daß** der Stützausleger (20) aus mindestens zwei teleskopierbaren Teilen (40,42) besteht, von denen der äußere Auslegerteil (42) das Fußteil (26) trägt.

8. Arbeitsmaschine nach einem der Ansprüche 4 bis 7, **dadurch gekennzeichnet, daß** zwei nach entgegengesetzten Seiten des Fahrgestells (10) weisende, im Bereich ihrer inneren Segmentpartien (44) die Fahrgestellängsachse (54) in verschiedenen Ebenen kreuzende Teleskopsegmente (18) zur Aufnahme je eines Stützauslegers (20) vorgesehen sind.

9. Arbeitsmaschine nach einem der Ansprüche 1 bis B, **dadurch gekennzeichnet, daß** die Segmentpartien (44,48) des Teleskopsegments (18) und der Stützausleger (20) kreisbogenförmig gekrümmt sind.

10. Arbeitsmaschine nach Anspruch 9, **dadurch gekennzeichnet, daß** das Teleskopsegment (1B) die Fahrgestellängsachse (54) hinter einer Vorderachse oder einem Führerhaus (52) kreuzt und ausstellseitig schräg nach außen in Richtung Vorderachse oder Führerhaus weist.

11. Arbeitsmaschine nach Anspruch 9, **dadurch gekennzeichnet, daß** das Teleskopsegment (18) tangential zur Fahrzeuglängsachse (54) ausgerichtet ist und ausstellseitig in Fahrtrichtung schräg seitlich nach außen weist.

12. Arbeitsmaschine nach einem der Ansprüche 1 bis 11, **gekennzeichnet durch** einen die äußere Segmentpartie (48) in mindestens einer vorgegebenen Winkelstellung gegen Verdrehen um ihre Gelenkachse (46) sperrenden Verriegelungsmechanismus.

## Claims

1. Mobile work machine with a vehicle chassis (10) including at least one front axle and one rear axle, at least one telescope segment (18) configured as a sliding housing, provided on the vehicle chassis and preferably horizontally oriented, and a support strut (20) displaceable in the telescope segment (18) between a retracted transport position and at least one extended support position and supportable on the ground via a foot part (26) provided on its free end, thereby **characterized**, that the telescope segment (18) includes an inner segment part (44) fixed to the vehicle chassis and an outer segment part (48) limitedly pivotal with respect thereto about a pivot linkage axis (46) which is parallel to the vehicle chassis vertical axis.

2. Work machine according to Claim 1, thereby **characterized**, that the outer segment part (48) together with the pivot linkage (46) are provided on a carrier (56) limitedly displaceable relative to the vehicle chassis perpendicularly to the vehicle chassis longitudinal axis (54).

3. Work machine according to Claim 2, thereby **characterized**, that the carrier includes a guide part (60) guided in a displacement guide (58). perpendicularly to the vehicle chassis, longitudinal axis (54), and an outer segment part (48) carrying pivot part. (62) pivotal with respect to, the guide part (60) about a pivot axis (46) .

4. Work machine according to one of Claims 1-3, thereby **characterized**, that the vehicle chassis fixed inner segment part (44) is provided spaced apart behind . a front axle or behind a driver cabin (52) of the vehicle chassis, and has its opening directed diagonally in the direction of the front axle or driver cabin.

5. Work machine according to Claim 4, thereby **characterized**, that the outer segment part (48) together with the support strut (20) when in their support position are pivotal in the direction of the front axle against the vehicle chassis (10).

6. Work machine according to Claim 4 or 5, thereby **characterized**, that the pivot axis (46) for the outer segment part (48) is set-off laterally in the direction of the front axle.

7. Work machine according to one of Claims 1-6, thereby **characterized**, that the support strut (20) is comprised of at least two telescopic parts (40, 42), of which the outer support strut part (42) carries the foot part (26).

8. Work machine according to one of Claims 4-7, thereby **characterized**, that two telescope segments (18) are provided for receiving respectively one support strut (20), directed towards opposite sides of the vehicle chassis (10), and in the area of their inner segment parts (44) cross over the vehicle chassis longitudinal axis (54) in different levels.

9. Work machine according to one of Claims 1-8, thereby **characterized**, that the segment parts (44, 48) of the telescope segment (18) and the support struts (20) are curved arc-like.

10. Work machine according to Claim 9, thereby **characterized**, that the telescope segment (18) crosses over the vehicle chassis longitudinal axis (54) behind a front axle or a driver cabin (52), with an outlet directed diagonally in the direction of the front axle or driver cabin.

11. Work machine according to Claim 9, thereby **characterized**, that the telescope segment (18) is oriented tangentially to the vehicle longitudinal axis (54) and, on the outlet side, as directed diagonally laterally towards the outside.

12. Work machine according to one of Claims 1-11, **characterized by** a locking mechanism for locking the outer segment part (48) in at least one predetermined angular position against pivoting about the linkage axis (46).

## Revendications

1. Machine de travail mobile dotée d'un châssis (10) présentant au moins un axe avant et un axe arrière, d'au moins un bras télescopique (18) formé en boîte à tiroir placé sur le châssis, dirigé de préférence horizontalement, et d'un bras d'appui (20) déplaçable dans le bras télescopique (18) entre une position de transport rentrée et au moins une position d'appui réglable, pouvant s'appuyer du côté du fond sur son extrémité libre avec un pied (26), **caractérisée en ce que** le bras télescopique (18) est constitué d'un segment de bras intérieur (44) fixé au châssis et d'un segment de bras extérieur (48) opposé à celui-ci, pivotable de manière limitée autour d'un axe d'articulation (46) parallèle à l'axe vertical du châssis.

2. Machine de travail selon la revendication 1, **caractérisée en ce que** le segment extérieur (48) est placé avec l'axe d'articulation (46) sur un support (56) déplaçable transversalement à l'axe longitudinal du châssis, de manière limitée par rapport au châssis.

3. Machine de travail selon la revendication 2, **caractérisée en ce que** le support présente une pièce de guidage (60) guidée dans un guidage de poussée (58) transversalement à l'axe du châssis (54), et une pièce orientable (62) portant le segment extérieur (48), pivotable par rapport à la pièce de guidage (60) autour de l'axe d'articulation (46).

4. Machine de travail selon l'une des revendications 1 à 3, **caractérisée en ce que** le segment intérieur (44) fixé au châssis est placé à distance derrière un axe avant ou un châssis-cabine (52) du châssis et est dirigé du côté réglable de manière inclinée dans le sens de l'axe avant ou du châssis-cabine.

5. Machine de travail selon la revendication 4, **caractérisée en ce que** le segment extérieur (48) est pivotable avec le bras support (20) se trouvant dans sa position d'appui, dans le sens de l'axe avant contre le châssis (10).

6. Machine de travail selon la revendication 4 ou 5, **caractérisée en ce que** l'axe d'articulation (46) est décalé latéralement par rapport au segment extérieur (48) dans le sens de l'axe avant.

7. Machine de travail selon l'une des revendications 1 à 6, **caractérisée en ce que** le bras support (20) est constitué d'au moins deux pièces télescopiques (40, 42), la pièce d'appui (42) extérieure porte le pied (26).

8. Machine de travail selon l'une des revendications 4 à 7, **caractérisée en ce que** deux bras télescopiques (18) pour loger chacun un bras support (20) sont prévus, dirigés vers des, côtés opposés du châssis (10), croisant l'axe longitudinal du châssis (54) dans différents niveaux dans la partie de leurs segments intérieurs (44).

9. Machine de travail selon l'une des revendications 1 à 8, **caractérisée en ce que** les segments (44, 48) du bras télescopique (18) et du bras d'appui (20) sont courbés en forme d'arc de cercle.

10. Machine de travail selon la revendication 9, **caractérisée en ce que** le bras télescopique (18) croise l'axe longitudinal du châssis (54) derrière un axe avant ou un châssis-cabine (52) et est dirigé du côté réglable obliquement vers l'extérieur dans le sens de l'axe avant ou du châssis-cabine.

11. Machine de travail selon la revendication 9, **caractérisée en ce que** le bras télescopique (18) est dirigé tangentiellement par rapport à l'axe longitudinal du châssis (54) et est dirigé du côté réglable vers l'extérieur de manière inclinée latéralement dans le sens de marche.

12. Machine de travail selon l'une des revendications 1 à 11, **caractérisée par** un mécanisme de verrouillage bloquant le segment (48) extérieur dans au moins une position angulaire prédéfinie par rapport à la rotation autour de son axe d'articulation (46).
